# EUROPEAN PATENT APPLICATION

(11) **EP 1 722 364 A1**
(43) Date of publication of application: **15.11.2006**
(21) Application number: 05719820.2
(22) Date of filing: 02.03.2005
(51) Int. Cl.: G11B 20/10, G11B 20/18, G11B 27/00, H04N 5/91, H04N 5/93

(54) **INFORMATION REPRODUCTION DEVICE AND INFORMATION REPRODUCTION METHOD**

(30) Priority: 02.03.2004 JP 2004057897
(71) Applicant: Pioneer Corporation, Tokyo 153-0063 (JP)
(72) Inventor: YAKO, Isao, c/o Kawagoe koujou, Kawagoe-shi, Saitama 3508555 (JP)
(74) Representative: Popp, Eugen
(86) International application number: PCT/JP2005/003505
(87) International publication number: WO 2005/083704

(57) **Abstract**

It is an object of the invention to play back presentation data even when an abnormality has occurred in playback control data. An information playback apparatus 1 for playing back contents formed by including titles #1, #2 ... having a plurality of files and playback control data Dvtsi for managing each of said files, and data units in which each file has presentation data A,V... and playback control data N for managing these data. The playback apparatus comprises: a signal processing unit 8 for playing back the presentation data A and V in accordance with the playback control data Dvtsi and N; and an abnormality detecting unit 6 for detecting an abnormality in each of data Dvtsi and data N. When the presentation data is being played back and once an abnormality is detected in the playback control data Dvtsi, a title to which the data Dvtsi belongs is detected, thereby performing a playback from the presentation data stored in an initial data belonging to this tile, without following the playback control data Dvtsi belonging to this title. Upon detecting an abnormality in the playback control data N, it is possible to detect a data unit to which the playback control data N belongs, and continue to play back the presentation data belonging to this data unit, without following the playback control data N belonging to this data unit.

## Description

### Technical Field

The present invention relates to an information playback apparatus and an information playback method for playing back information provided through storage medium, transmission media or the like.

### Technical Background

A so-called multimedia contents formation of information has been tried to unify and handle, as digital contents, various information such as character, sound, stationary and moving pictures which have been considered as individual and independent information. Further, there have been developed various storage media such as MD (Mini Disc), CD (Compact Disc), DVD (Digital Versatile Disc), HD (Hard Disc), memory card, and the like. Meanwhile, an information environment has been formed which is capable of correlating various transmission media represented by digital broadcasting network, the Internet, mobile communication and the like so as to handle these digital contents.

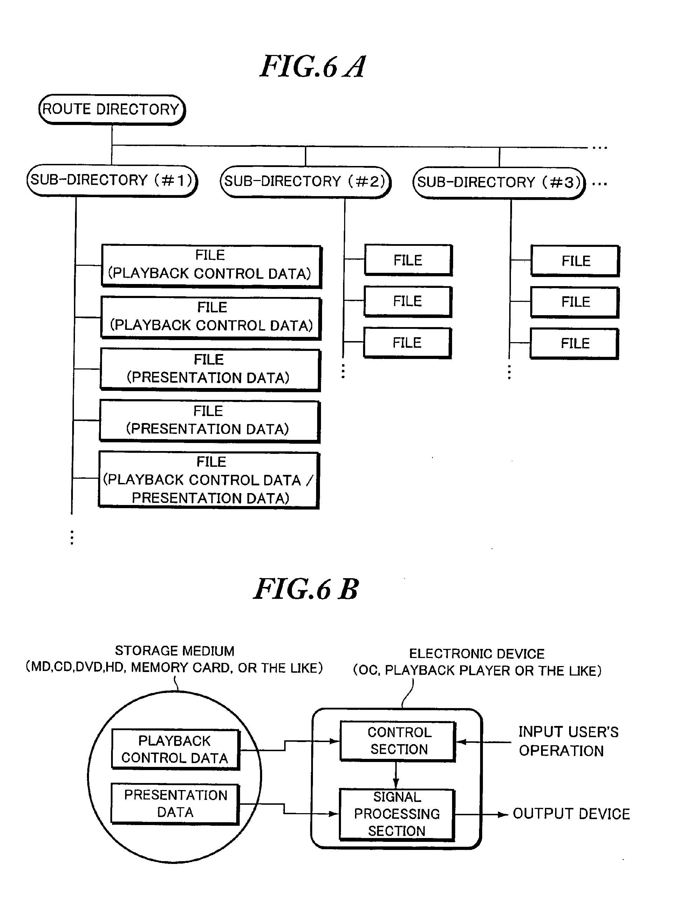

Here, with regard to a file system for managing digital contents, there has been in use a hierarchical directory structure as schematically shown in Fig. 6 (a). Further, if various digital data (hereinafter referred to as "presentation data") such as sound and picture as well as playback control data for controlling the playback of the presentation data are stored in one or more files stored in a directory (holder), it is possible to play back the presentation data in accordance with the playback control data.

For example, with regard to a file system in a storage medium, there has been in use a hierarchical directory structure based on a concept of constituting digital contents by presentation data and playback control data.

Moreover, if, in accordance with a hierarchical directory structure, a file consisting of presentation data and playback control data is stored in a predetermined directory, or if a file consisting of presentation data and another file consisting of playback control data are stored in a predetermined directory, and if these presentation data and playback control data are recorded in a storage medium, the following operation will become possible. Namely, as schematically shown in Fig. 6(b), when one of various electronic devices including a playback player and a personal computer (PC) operates to play back the presentation data recorded in its storage medium, a control section within the electronic device will obtain the playback control data and the control section will operate to control a signal processing section in accordance with the obtained playback control data so as to play back the presentation data and generate audio signal and video signal for driving an output unit such as a loudspeaker and a monitor.

Moreover, there have been developed an authoring software (which is a computer program that allows a personal computer or the like to carry out a desired function such as editing) for use in a personal computer or the like to edit digital contents, and an electronic device which has an authoring function, thereby providing a user with a further improved convenience.

Namely, an electronic device having such an authoring software and thus an authoring function can perform an editing or the like on the above-mentioned playback control data. In this way, once a user performs an editing or the like on the playback control data and records the same along with the presentation data in the storage medium, when the playback player, the personal computer or the like is caused to play back the presentation data recorded in the storage medium, it is possible to play back the presentation data in accordance with the playback control data edited in the above-mentioned manner.

Moreover, when a user employs an authoring software installed in the personal computer to perform an editing or the like on the playback control data and transmits the edited playback control data along with the presentation data to a third party through a transmission media such as the Internet or the like, the third party can use his or her personal computer to receive (download) the presentation data and the playback control data so as to play back the presentation data in accordance with the edited playback control data.

### Disclosure of the Invention

### Problem(s) to be Solved by the Invention

On the other hand, when a user employs an electronic device containing the afore-mentioned authoring software and thus having an authoring function to perform an editing or the like on the digital contents, there will be a possibility that an editing or the like will be performed on the playback control data not in accordance with a standard of storage medium, resulting in a problem that an incorrect data is used as the playback control data and recorded along with the presentation data in the storage medium.

Once an incorrect data obtained by an incorrect editing not based on a standard is recorded as the playback control data in a storage medium, when one of various electronic devices including a playback player and a personal computer operates to play back the presentation data recorded in its storage medium, even if there is nothing abnormal in the presentation data, it is still impossible to play back the presentation data using the incorrect playback control data, resulting in a problem that an abnormality will occur in the playback operation which will thus have to be compulsorily stopped.

Moreover, even if a user or the like does not perform an incorrect editing or the like on the playback control data, there is still a possibility that an error will occur in the playback control data due to an operating environment in which playback is performed by one of various electronic devices including a playback player and a personal computer. When such an error has occurred, even if one of various electronic devices including a playback player and a personal computer does not suffer from an abnormality in the presentation data, it is still impossible to playback the presentation data using the incorrect playback control data, resulting in a problem that some abnormalities will occur in the playback operation which will thus have to be compulsorily stopped.

Moreover, not only in a case where a user or the like records in the storage medium the playback control data made mistaken due to an incorrect editing, but also in a case where a user or the like performs an incorrect editing on the playback control data and has transmitted the edited playback control data along with the presentation data to a third party through a transmission media such as the Internet or the like, when the third party uses his or her personal computer to receive (download) and playback the presentation data, since the playback control data is not based on a standard, even if there is nothing abnormal in the presentation data, there is still a problem that some abnormalities will occur in the playback operation which will thus have to be compulsorily stopped.

Further, in a case where a user or the like has transmitted the playback control data based on a standard as well as a presentation data to a third party through transmission media such as the Internet or the like, when the third party uses his or her personal computer to receive (download) and playback the presentation data, once an error occurs in the playback control data, even if there is nothing abnormal in the presentation data, it will still become impossible to perform a playback using the playback control data containing the error, resulting in a problem that some abnormalities will occur in the playback operation which will thus have to be compulsorily stopped.

The present invention has been accomplished in view of the above problems and it is an object of the invention to provide an information playback apparatus and an information playback method capable of playing back presentation data even when a mistake or an error has occurred in playback control data during the playback of digital contents.

### Means for Solving the Problem

An invention recited in claim 1 is an information playback apparatus for playing back contents formed by including one or more data sets having a plurality of files for storing presentation data and having playback control data for managing contents of each of said files, said information playback apparatus comprising: signal processing means for performing a playback of said presentation data in accordance with control contents of said playback control data; abnormality detecting means for detecting whether there is an abnormality in said playback control data; and control means for, when said signal processing means is playing back said presentation data and once said abnormality detecting means detects an abnormality in said playback control data, detecting a data set to which the playback control data containing said abnormality belongs, and causing the signal processing means to perform a playback from the presentation data stored in an initial file belonging to the detected data set, without following said playback control data belonging to the detected data set.

An invention recited in claim 2 is an information playback apparatus for playing back contents formed by including one or more data units having presentation data and playback control data for managing the contents of the presentation data, said information playback apparatus comprising: signal processing means for performing a playback of said presentation data in accordance with control contents of said playback control data; abnormality detecting means for detecting whether there is an abnormality in said playback control data; and control means for, when said signal processing means is playing back said presentation data and once said abnormality detecting means detects an abnormality in said playback control data, detecting a data unit to which the playback control data containing said abnormality belongs, and causing the signal processing means to continue a playback from the presentation data belonging to the detected data unit, without following said playback control data belonging to the detected data unit.

An invention recited in claim 3 is an information playback apparatus for playing back contents formed by including one or more data sets having a plurality of files and first playback control data for managing contents of each of said files, and including one or more data units in which said files have presentation data and second playback control data for managing contents of said presentation data, said information playback apparatus comprising: signal processing means for performing a playback of said presentation data in accordance with control contents of said first and second playback control data; abnormality detecting means for detecting whether there is an abnormality in said first and second playback control data; and control means for, when said signal processing means is playing back said presentation data and once said abnormality detecting means detects an abnormality in said first playback control data, detecting a data set to which the first playback control data containing said abnormality belongs, and causing the signal processing means to perform a playback from the presentation data stored in an initial file belonging to the detected data set, without following said playback control data belonging to the detected data set, and for, when said signal processing means is playing back said presentation data and once said abnormality detecting means detects an abnormality in said second playback control data, detecting a data unit to which the second playback control data containing said abnormality belongs, and causing the signal processing means to continue the playback from the presentation data belonging to the detected data unit, without following said playback control data belonging to the detected data unit.

An invention recited in claim 4 is an information playback apparatus according to any one of claims 1 to 3, wherein said contents are recorded in a storage medium.

An invention recited in claim 5 is an information playback apparatus according to any one of claims 1 to 3, wherein said contents are supplied through transmission media.

An invention recited in claim 6 is an information playback method for playing back contents formed by including one or more data sets having a plurality of files for storing presentation data and having playback control data for managing contents of each of said files, said information playback method comprising: a signal processing step for performing a playback of said presentation data in accordance with control contents of said playback control data; an abnormality detecting step for detecting whether there is an abnormality in the playback control data; and a control step for, when in said signal processing step said presentation data is being played back and once said abnormality detecting step detects an abnormality in said playback control data, detecting a data set to which the playback control data containing said abnormality belongs, and using the signal processing step to play back the presentation data stored in an initial file belonging to the detected data set, without following said playback control data belonging to the detected data set.

An invention recited in claim 7 is an information playback method for playing back contents formed by including one or more data units having presentation data and playback control data for managing the contents of the presentation data, said information playback method comprising: a signal processing step for performing a playback of said presentation data in accordance with control contents of said playback control data; an abnormality detecting step for detecting whether there is an abnormality in the playback control data; and a control step for, when in said signal processing step said presentation data is being played back and once said abnormality detecting step detects an abnormality in said playback control data, detecting a data unit to which the playback control data containing said abnormality belongs, and continuing in the signal processing step a playback from the presentation data belonging to the detected data unit, without following said playback control data belonging to the detected data unit.

An invention recited in claim 8 is an information playback method for playing back contents formed by including one or more data sets having a plurality of files and first playback control data for managing contents of each of said files, and including one or more data units in which said files have presentation data and second playback control data for managing contents of said presentation data, said information playback method comprising: a signal processing step for performing a playback of said presentation data in accordance with control contents of said first and second playback control data; an abnormality detecting step for detecting whether there is an abnormality in said first and second playback control data; and a control step for, when in said signal processing step said presentation data is being played back and once said abnormality detecting step detects an abnormality in said first playback control data, detecting a data set to which the first playback control data containing said abnormality belongs, and performing in said signal processing step a playback of the presentation data stored in an initial file belonging to the detected data set, without following said playback control data belonging to the detected data set, and for, when in said signal processing step said presentation data is being played back and once said abnormality detecting step detects an abnormality in said second playback control data, detecting a data unit to which the second playback control data containing said abnormality belongs, and continuing in the signal processing step the playback from the presentation data belonging to the detected data unit, without following said playback control data belonging to the detected data unit.

An invention recited in claim 11 is a program for causing a computer to play back contents formed by including one or more data sets having a plurality of files for storing presentation data and having playback control data for managing contents of each of said files, said program comprising: a signal processing step for causing said computer to play back said presentation data in accordance with control contents of said playback control data; an abnormality detecting step for causing the computer to detect whether there is an abnormality in the playback control data; and a control step for, when said computer uses said signal processing step to play back said presentation data and once said abnormality detecting stepdetects an abnormality in said play back control data, detecting a data set to which the playback control data containing said abnormality belongs, and using the signal processing step to play back the presentation data stored in an initial file belonging to the detected data set, without following said playback control data belonging to the detected data set.

An invention recited in claim 12 is a program for causing a computer to play back contents formed by including one or more data units having presentation data and playback control data for managing the contents of the presentation data, said program comprising: a signal processing step for causing said computer to play back said presentation data in accordance with control contents of said playback control data; an abnormality detecting step for causing said computer to detect whether there is an abnormality in the playback control data; and a control step for, when said computer uses said signal processing step to play back said presentation data and once said abnormality detecting step detects an abnormality in said playback control data, detecting a data unit to which the playback control data containing said abnormality belongs, and using the signal processing step to continue a playback from the presentation data belonging to the detected data unit, without following said playback control data belonging to the detected data unit.

An invention recited in claim 13 is a program for causing a computer to play back contents formed by including one or more data sets having a plurality of files and first playback control data for managing contents of each of said files, and including one or more data units in which said files have presentation data and second playback control data for managing contents of said presentation data, said program comprising: a signal processing step for causing said computer to play back said presentation data in accordance with control contents of said first and second playback control data; an abnormality detecting step for causing said computer to detect whether there is an abnormality in said first and second playback control data; and a control step for, when said computer uses said signal processing step to play back said presentation data and once said abnormality detecting step detects an abnormality in said first playback control data, detecting a data set to which the first playback control data containing said abnormality belongs, and using said signal processing step to play back the presentation data stored in an initial file belonging to the detected data set, without following said playback control data belonging to the detected data set, and for, when said computer uses said signal processing step to play back said presentation data and once said abnormality detecting step detects an abnormality in said second playback control data, detecting a data unit to which the second playback control data containing said abnormality belongs, and using the signal processing step to continue the playback of the presentation data belonging to the detected data unit, without following said playback control data belonging to the detected data unit.

### Brief Description of the Drawings

Fig. 1 is a view showing a structure of an information playback apparatus according to an embodiment of the present invention and a file system of a storage medium.
Fig. 2 is a block diagram showing a structure of an information playback apparatus according to an embodiment.
Fig. 3 is a view showing a directory structure of a DVD.
Fig. 4 is a view showing a file structure of a DVD.
Fig. 5 is a flow chart explaining an example of an operation performed by the information playback apparatus shown in Fig. 2.
Fig. 6 is a view showing problems existing in prior art.

### Best Mode of Carrying Out the Invention

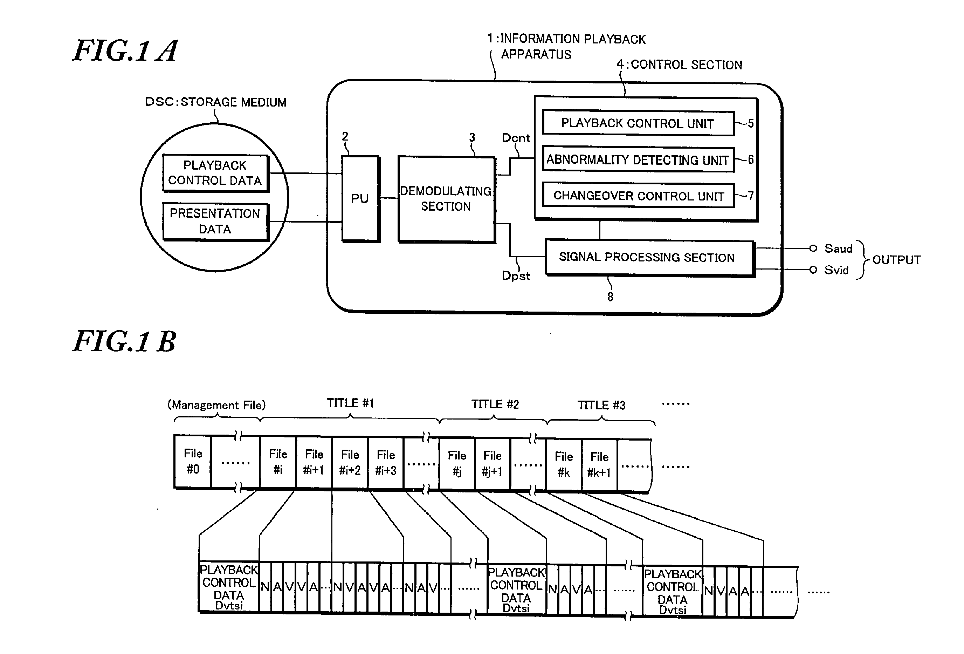

In the following, description will be given to explain a preferred embodiment of the present invention with reference to Fig. 1. Fig. 1(a) is a block diagram showing a structure of an information playback apparatus of the present embodiment, and Fig. 1 (b) is a view schematically showing a file structure of a storage medium.

As shown in Fig. 1(a), the information playback apparatus 1 is a so-called playback player which reads digital contents recorded in a storage medium DSC such as CD and DVD, and comprises a pickup (PU) 2, a demodulating section 3, a control section 4, and a signal processing section 8. The control section 4 includes a playback control unit 5, an abnormality detecting unit 6, and a switchover control unit 7.

Moreover, the playback control unit 5, the abnormality detecting unit 6, and the changeover control unit 7 which together form the control section 4 are formed by a microprocessor (MPU), a digital signal processor (DSP) or the like which operate in accordance with a computer program for performing a playback processing.

The pickup 2 reads the information recorded in the storage medium DSC, and successively converts the information into electrical signals so as to be outputted.

The demodulating section 3, by demodulating an electric signal outputted from the pickup 2, generates a playback control data Dcnt such as playback control data N and Dvtsi which will be discussed later, and presentation data Dpst such as audio data A and video data V which will also be discussed later, and supplies the playback control data Dcnt to the control section 4 and the presentation data Dpst to the signal processing section 8.

The playback control unit 5 analyzes the control contents specified by the playback control data Dcnt, and controls the playback operation in the signal processing section 8 in accordance with the control contents.

Moreover, as will be discussed in more detail later, in a case where the playback control data Dcnt contains incorrect data not based on a standard of storage medium, once the playback control unit 5 receives an instruction from the changeover control unit 7 for changing a playback method, the playback control unit 5 will perform a control for disregarding the incorrect data contained in the playback control data Dcnt and causing the signal processing section 8 to continue its playback operation, so as to replace a usual control based on the playback control data Dcnt.

The abnormality detecting unit 6 investigates whether the playback control data Dcnt contains an incorrect data which is not based on a standard of storage medium DSC. Once the abnormality detecting unit 6 detects an incorrect data, it determines that an abnormality has occurred and supplies an instruction to the changeover control unit 7.

The changeover control unit 7, upon receiving an instruction from the abnormality detecting unit 6 indicating that an abnormality has occurred, will supply an instruction to the playback control unit 5 to effect a control for disregarding the incorrect data contained in the playback control data Dcnt and causing the signal processing section 8 to continue its playback operation, so as to replace a usual control based on the playback control data Dcnt.

The signal processing section 8 operates to process the presentation data Dpst in accordance with the control signal fed from the playback control unit 5, so as to convert the audio data A and the video data V contained in the presentation data Dpst into audio signal Saud and video signal Svid so as to be supplied to an output device such as a speaker or a monitor.

Next, with reference to Fig. 1(b), description will be given to explain a file system of a storage medium DSC which allows the information playback apparatus 1 having the above-discussed structure to perform an information playback.

At first, upon briefly describing the file system, it will be understood that the digital contents are comprised of one or more "data sets" which are called "titles" following the management file for managing an entire recording area of the storage medium DSC.

Each data set (hereinafter referred to as "title") comprises "file for control" which has stored therein playback control data for file management, and a plurality of "data files" which have stored therein various data.

Each data file comprises "playback control data" for data management, and "presentation data" consisting of audio data and video data.

That is, as shown in Fig. 1(b), management file consisting of management data for managing an entire recording area of the storage medium DSC is recorded in a predetermined recording area of the storage medium DSC, and a plurality of files File#i, File#i+1, File#i+2, File#i+3 ..., File#j, File#j+1 ..., File#k, File#k+1, etc. are recorded in the recording area following the management file.

In a case where digital contents have for example a plurality of titles #1, #2, and #3, an arrangement will be formed in accordance with a hierarchical directory defined by a standard, with title #1 consisting of a plurality of files File#i, File#i+1, File#i+2, and File#i+3 ..., title #2 consisting of a plurality of files File#j and File#j+1 ..., and title #3 consisting of a plurality of files File#k and File#k+1 ....

Further, initial files File#i, File#j and File#k of the respective titles #1, #2, and #3 are prepared for storing first playback control data Dvtsi for identifying the contents of remaining files File#i+1, File#i+2, and File#i+3 ..., files File#j+1 ..., and files File#k+1 ... to specify a playback sequence or the like.

Namely, files File#i, File#j, and File#k serve as control files consisting of first playback control data (hereinafter, simply referred to as "playback control data") Dvtsi, while files File#i+1, File#i+2, and File#i+3 ..., files File#j+1 ..., and files File#k+1 ... serve as so-called data files which have presentation data Dpst such as audio data A and video data V to be played back in accordance with the playback control data Dvtsi.

In more detail, the control file File#i of title #1 is prepared for storing playback control data Dvtsi for identifying the contents of data files File#i+1, File#i+2, and File#i+3 ... to specify a playback sequence or the like. The control file File#j of title #2 is prepared for storing playback control data Dvtsi for identifying the contents of data files File#j+1 ... to specify a playback sequence or the like. The control file File#k of title #3 is prepared for storing playback control data Dvtsi for identifying the contents of data files File#k+1 ... to specify a playback sequence or the like.

Furthermore, data files File#i+1, File#i+2, File#i+3 ... forming the title #1 each comprises presentation data Dpst consisting of one or more audio data A and video data V, as well as second playback control data (hereinafter, simply referred to as "playback control data") N for specifying logical addresses of audio data A and video data V. Similarly, data files File#j+1 ... and data files File#k+1 ... of the titles #2 and #3 are also each comprised of the presentation data Dpst consisting of one or more audio data A and video data V, as well as the playback control data N.

When this information playback apparatus 1 operates to play back for example the title #1, the playback control unit 5 will operate in accordance with the playback control data Dvtsi of the control file FiLe#i supplied as playback control data Dcnt from the demodulating section 3, so as to detect the playback sequence of the data files FiLe#i+1, FiLe#i+2, FiLe#i+3, and will also operate in accordance with the playback control data N of the respective data files FiLe#i+1, FiLe#i+2, FiLe#i+3 supplied as the playback control data Dcnt, to detect the logical addresses of audio data A and video data V, and to supply the detected logical addresses to the signal processing section 8. Then, the signal processing section 8 will operate in accordance with the logical addresses or the like to extract and play back the audio data A and video data V or the like contained in the presentation data Dpst fed from the demodulating section 3.

Furthermore, as described above, the abnormality detecting unit 6 will operate to investigate whether an incorrect data is contained in the playback control data Dcnt (namely, playback control data Dvsti and playback control data N) supplied from the demodulating section 3 to the playback control unit 5.

Once the abnormality detecting unit 6 detects that an incorrect data is contained in the playback control data Dvsti, the playback control unit 5, the abnormality detecting unit 6, and the changeover control unit 7 will perform the following processing.

For example, when the title #1 is played back, once the abnormality detecting unit 6 detects that the playback control data Dvtsi of the control file File#i contains an incorrect data which is not based on a standard, the abnormality detecting unit 6 will specify a title name of the title #1 to which the control file File#i belongs and issue an instruction to the changeover control unit 7 indicating that an abnormality has occurred. Further, when the title #2 is played back, once the abnormality detecting unit 6 detects that the playback control data Dvtsi of the control file File#j contains an incorrect data which is not based on a standard, the abnormality detecting unit 6 will specify a title name of the title #2 to which the control file File#j belongs and issue an instruction to the changeover control unit 7 indicating that an abnormality has occurred. Similarly, when the title #3 is played back, once the abnormality detecting unit 6 detects that the playback control data Dvtsi of the control file File#k contains an incorrect data which is not based on a standard, the abnormality detecting unit 6 will specify a title name of the title #3 to which the control file File#kbelongs and issue an instruction to the changeover control unit 7 indicating that an abnormality has occurred.

Then, once the changeover control unit 7 receives the above instruction from the abnormality detecting unit 6, the changeover control unit 7 will issue an instruction to perform a control for supplying a specified title name to the playback control unit 5, disregarding the incorrect data contained in the playback control data Dcnt of the title, and causing the signal processing section 8 to continue a playback operation.

Further, once the playback control unit 5 receives an instruction from the changeover control unit 7, the playback control unit 5 will issue an instruction to the signal processing section 8 to detect a data file related to a supplied title name and perform a playback from an initial data file.

Namely, in a case where an incorrect data is contained in a playback control data Dvtsi of the control file File#i belonging to the title #1, the playback control unit 5 will operate in accordance with a file name of the title #1 to detect an initial data file FiLe#i+1 of the title #1. Upon confirming that the above data file is provided for storing a presentation data Dpst, an instruction will be issued to the signal processing section 8 to perform a playback from the data file FiLe#i+1.

Even in a case where an incorrect data is contained in the playback control data Dvtsi of the control file File#j which belongs to the title #2, the playback control unit 5 will also operate in accordance with the file name of title #2 to detect an initial data file FiLe#j+1 belonging to the title #2, confirming that the detected data file is a data file for storing the presentation data Dpst. Subsequently, the playback control unit 5 issues an instruction to the signal processing section 8 to perform a playback from the data file FiLe#j+1. Further, in a case where an incorrect data is contained in the playback control data Dvtsi of the control file File#k which belongs to the title #3, the playback control unit 5 will operate in accordance with the file name of title #3 to detect an initial data file FiLe#k+1 belonging to the title #3, confirming that the detected data file is a data file for storing the presentation data Dpst. Afterwards, the playback control unit 5 issues an instruction to the signal processing section 8 to perform a playback from the data file FiLe#k+1.

Thus, when an incorrect data is contained in the playback control data Dvtsi of the control files File#i, File#j, File#k ... of the respective titles #1, #2 and #3, the playback control unit 5, the abnormality detecting unit 6 and the changeover control unit 7 will operate to control the signal processing section 8 to perform a playback from the initial data files File#i+1, File#j+1, and File#k+1 which belong to the respective tiles #1, #2 and #3 ..., so as to change a playback method. In this way, even if an abnormality has occurred in the playback control data Dvtsi, it is still possible to disregard such an abnormality so as to continue the playback of the presentation data Dpst in each data file.

On the other hand, once the abnormality detecting unit 6 detects that an incorrect data is contained in a playback control data N, the playback control unit 5, the abnormality detecting unit 6 and the changeover control unit 7 will perform the following processing.

For example, when data "A, V, V, A ..." of the data file File#i+1 belonging to the title #1 are to be played back in an order as such, the first two data "A, V" will be at first played back by the signal processing section 8. If an incorrect data is contained in the playback control data N which is for specifying a logical address for designating a third data "V", an abnormality will be detected by the abnormality detecting unit 6. Meanwhile, the abnormality detecting unit 6 will detect a logical address at the time the abnormality is detected, and supply the logical address to the changeover control unit 7 and issue an instruction to the unit 7 indicating that an abnormality has occurred.

Then, upon receiving the above instruction from the abnormality detecting unit 6, the changeover control unit 7 will supply the above logical address to the playback control unit 5, and stop an operation in which each data of the data file File#i+1 is played back in accordance with the playback control data N. Accordingly, the changeover control unit 7 will instruct that a playback method be changed so as to perform a playback from the data specified by the above logical address.

Further, upon receiving the above instruction from the changeover control unit 7, the playback control unit 5 will supply the above-mentioned logical address to the signal processing section 8, and control the signal processing section 8 to continue the playback from the data specified by the logical address, i.e., from the third data "V".

Moreover, in a case where an incorrect data is contained in the playback control data N of remaining data files File#i+2, File#i+3 ... as well as in a case where an incorrect data is contained in the playback control data N of the data files File#j+1 ... and data files File#k+1 ..., the playback control unit 5, the abnormality detecting unit 6 and the changeover control unit 7 will control the signal processing section 8 to continue a playback from the audio data A and the video data V specified by a logical address of a time when an abnormality was detected.

In this way, when an abnormality has occurred in the playback control data N of the data files File#i+1, File#i+2, File#i+3 ..., File#j+1 ..., and File#k+1 belonging to the titles #1, #2, and #3 ..., the playback control unit 5, the abnormality detecting unit 6 and the changeover control unit 7 will control the signal processing section 8 to continue a playback from the audio data A and the video data V specified by a logical address of a time when an abnormality was detected. Therefore, even if an abnormality has occurred in the playback control data N, it is allowed to disregard such an abnormality so as to continue the playback of the presentation data Dpst in each data file.

As discussed above, when an error caused by an incorrect data exists in the playback control data Dvtsi provided for setting a playback sequence or the like of the control files belonging to the titles #1, #2, and #3, the information playback apparatus 1 of the present embodiment will change its playback method so as to perform a playback from an initial (first) data file of the data files belonging to the title having the error. Moreover, when an abnormality has occurred in the playback control data N of a data file storing a presentation data, a playback will be continued from the presentation data Dpst consisting of the audio data A and the video data V specified by a logical address of a time when an abnormality was detected. Therefore, even in a case where a user uses an electronic device containing an authoring software and thus having an authoring function and performs an editing of digital contents but an incorrect data is contained in the playback control data Dvtsi or the playback control data N, it is still possible to continue the playback of the presentation data Dpst without bringing about any abnormality in the playback operation or stopping the playback.

Moreover, in a case where an error has occurred in the playback control data Dvtsi, the information playback apparatus 1 of the present invention will perform the same processing as in a case where an incorrect data is contained in the playback control data Dvtsi. On the other hand, in a case where an error has occurred in the playback control data N, the information playback apparatus 1 will perform the same processing as in a case where an incorrect data is contained in the playback control data N. For this reason, even when an error has occurred in the playback control data Dvtsi or N, it is still possible to continue the playback of the presentation data Dpst of the data file, without bringing about any abnormality in the playback operation or stopping the playback.

In addition, although the above-described embodiment relates to a playback player which plays back the digital contents recorded in storage media DSC such as CD and DVD, it is also applicable to an information playback apparatus which plays back digital contents supplied through transmission media such as the Internet.

Namely, rather than using the pickup 2 and the demodulating section 3 shown in Fig. 1 (a), it is possible to use a receiving interface to receive the digital contents supplied through transmission media such as the Internet, thereby forming an arrangement in which the playback control data Dcnt received by the receiving interface is inputted into the control section 4 and the presentation data Dpst is inputted into the signal processing section 8.

In this way, upon detecting an incorrect data contained in the playback control data Dcnt or an error occurring in the playback control data Dcnt, the playback control unit 5, the abnormality detecting unit 6 and the changeover control unit 7 will control the signal processing section 8 to change a playback method so as to perform a playback from an initial (first) data file of the data files belonging to the tiles containing the incorrect data or error. Further, in a case where an abnormality has occurred in a playback control data of a data file, the playback control unit 5, the abnormality detecting unit 6 and the changeover control unit 7 will control the signal processing section 8 to change a playback method to continue a playback from the presentation data Dpst consisting of the audio data A and the video data V specified by a logical address of a time when an abnormality was detected. As a result, even if an incorrect data is contained in the playback control data Dcnt or an error has occurred, it is still possible to continue the playback of the presentation data Dpst, without bringing about any abnormality in the playback operation or stopping the playback.

Moreover, if the functions of the above-described playback control unit 5, the abnormality detecting unit 6 and the changeover control unit 7 are formed by a computer program and such computer program is carried out by a microprocessor (MPU) contained in a microcomputer, it is possible for the microcomputer to provide the same functions as the information playback apparatus 1.

### Example

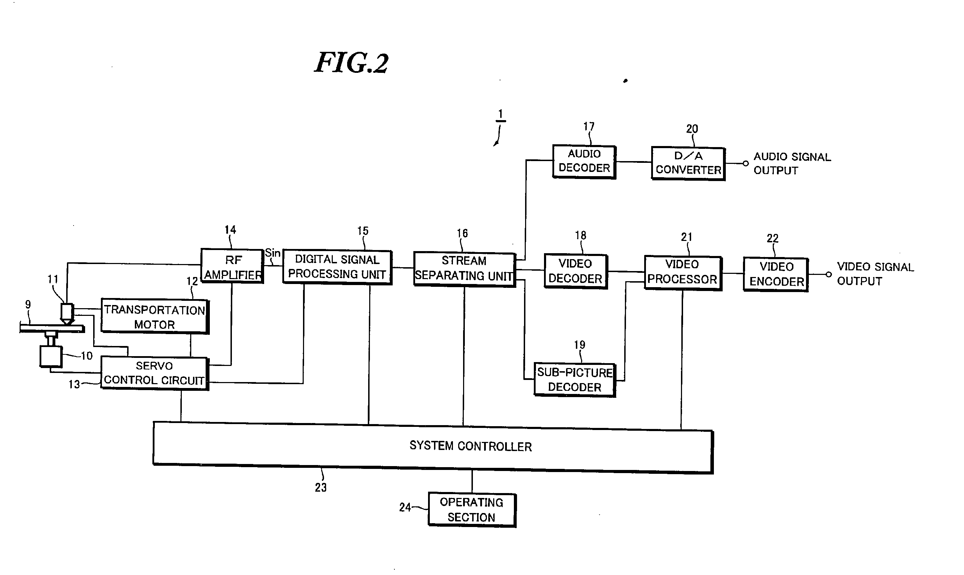

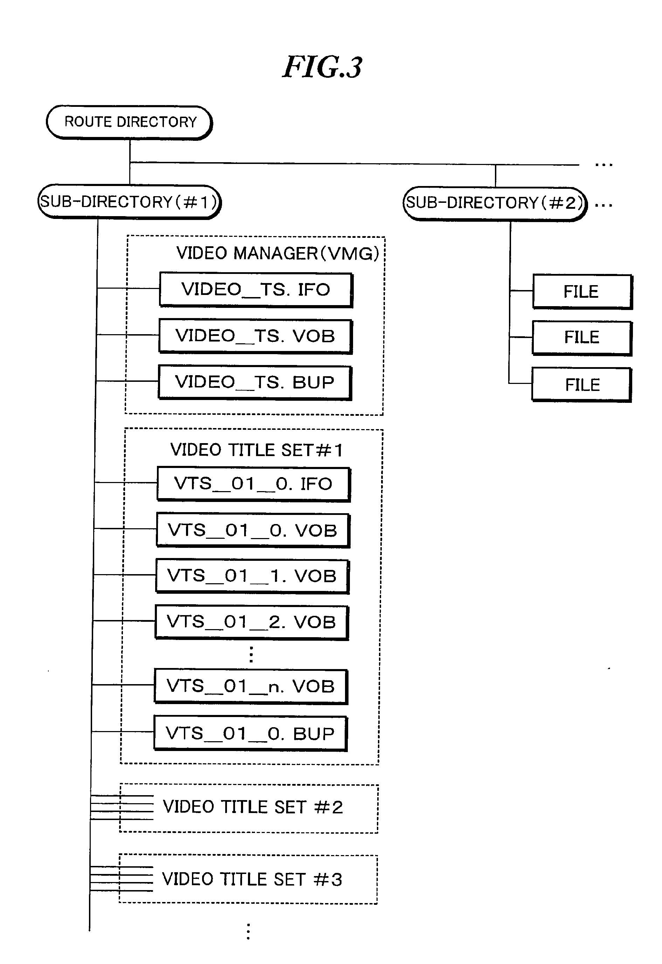

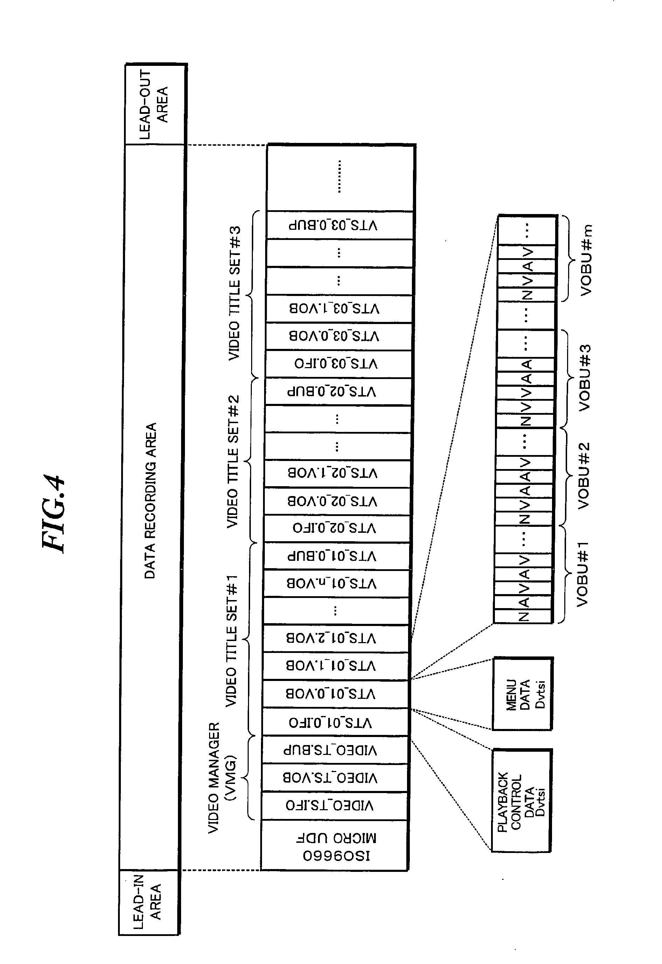

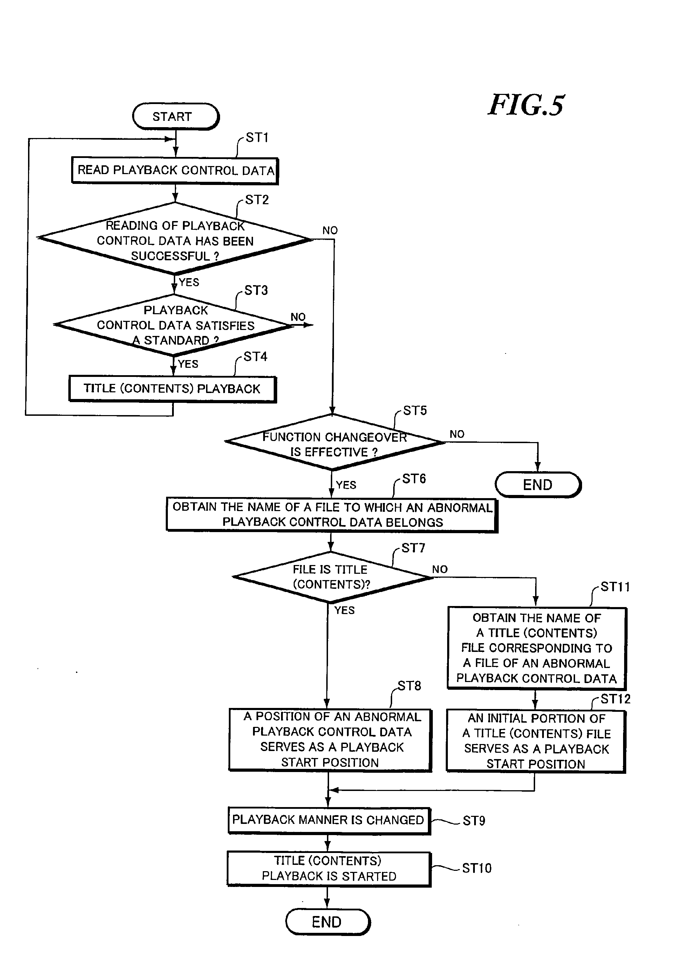

In the following, description will be given to explain a more detailed embodiment with reference to Figs. 2 to 5. Fig. 2 is a block diagram showing a structure of the information playback apparatus 1 of the present embodiment. Fig. 3 and Fig. 4 are charts showing file systems of DVD. Fig. 5 is a flow chart showing an example of an operation of the information playback apparatus of the present embodiment.

As shown in Fig. 2, the information playback apparatus 1 is a DVD player for playing back information recorded in a DVD. The apparatus comprises: a spindle motor 10 for turning a DVD 9 loaded in position; a pickup 11 for optically reading the information recorded in DVD 9; a transportation motor 12 for transporting the pickup 11 in the radial direction of DVD 9; a servo control circuit 13 for servo controlling the spindle motor 10, the pickup 11 and the transportation motor 7; and an RF amplifier 14 for amplifying an output signal from the pickup 11 and outputting the same as a read-out signal Sin. The information playback apparatus 1 further comprises: a digital signal processing unit 15; a stream separating unit 16; an audio decoder 17; a video decoder 18; a sub-picture decoder 19, a D/A converter 20; a video processor 21; a video encoder 22; a system controller 23; and an operating section 24.

Here, the digital signal processing unit 15 and the stream separating unit 16 are formed by digital signal processors (DSP), while the demodulating section 3 shown in Fig. 1(a) is formed by the digital signal processing unit 15.

Moreover, portions equivalent to the signal processing section 8 in Fig. 1(a) are formed by the digital signal processing unit 15, the stream separating unit 16, the audio decoder 17, the video decoder 18, the sub-picture decoder 19, the D/A converter 20, the video processor 21, and the video encoder 22.

The digital signal processing unit 15 A/D-converts the read-out signal Sin into read-out data so as to receive the data and performs a demodulation based on a DVD-Video standard, thereby generating playback control data and presentation data or the like from the read-out data.

Then, similar to the embodiment described with reference to Fig. 1, the digital signal processing unit 15 will operate to process audio data, video data, sub-picture data or the like forming the presentation data, in accordance with the control contents of the playback control data, so as to generate audio data, video data and sub-picture data capable of seamless playback.

The stream separating unit 16 separates the audio data, video data and sub-picture data generated in the signal processing unit 15 and capable of seamless playback, so as to supply the audio data to the audio decoder 17, the video data to the video decoder 18, and the sub-picture data to the sub-picture decoder 19.

The audio decoder 17 carries out an elongation processing on the audio data supplied from the stream separating unit 16 and then supplies the same to the D/A converter 20 which D/A-converts the audio data into audio signal for driving a speaker or the like and then outputs the audio signal.

Namely, according to a DVD-Video standard, it is possible to carry out a data compression on the audio data using a data compression manner such as AC-3 andMPEG audio or the like and record the compressed data in DVD 9. Then, the audio decoder 17 will perform an elongation processing on the compressed audio data so as to change the audio data back to an uncompressed state and supplies the same to the D/A converter 20, thereby outputting an audio signal.

The video decoder 18 carries out an elongation processing on the video data supplied from the stream separating unit 16 and compressed in a data compression manner such as MPEG 1 and MPEG 2, so as to change the video data back to an uncompressed state and supplies the same to the video processor 21.

The picture decoder 19 operates in the same way as the video decoder 18 to perform an elongation processing on the sub-picture data supplied from the stream separating unit 16, so as to change the sub-picture data back to an uncompressed state and supply the same to the video processor 21. Here, the sub-picture data is a sort of data for displaying a menu or a title.

The video processor 21 operates to synthesize the video data and sub-picture data supplied from the video decoder 18 and the sub-picture decoder 19 and supplies the synthesized video data to the video encoder 22.

The video encoder 22 converts the video data supplied from the video processor 21 into a video signal for displaying on a monitor or the like.

The system controller 23 has a microprocessor (MPU), serving as an equivalent to the playback control unit 5, the abnormality detecting unit 6 and the changeover control unit 7, controlling an entire playback operation of the present information playback apparatus 1 and a specific playback operation in accordance with an instruction of a user or the like inputted through the operating section 24.

The operating section 24 is equipped with various operating switches for a user to perform his or her desired inputting operation on the system controller 23, and has a display unit such as a liquid crystal display for displaying images in accordance with the data supplied from the system controller 23 and indicating an operating state of the present information playback apparatus 1.

Next, description will be given to explain a file system of DVD 9 with reference to Figs. 3 and 4.

Fig. 3 shows a directory structure and Fig. 4 shows a file structure.

At first, as shown in Fig. 3, the file system of DVD 9 has employed the same hierarchical directory structure as those shown in Fig. 6(a) and Fig. 1(b), which can store playback control data and presentation data in a plurality of files called video object (VOB).

Furthermore, as shown in Fig. 4, on the inmost side (lead-in area side) of the recording area of DVD 9 there has been recorded a logical format (ISO 9660 and Micro UDF) which enables an access to a plurality of the above-mentioned video object (VOB) files (hereinafter, referred to as "VOB file"). Following the logical format (ISO 9660 and Micro UDF) there have been recorded a plurality of VOB files called video managers (VMG) having information relating to an entire DVD 9. Further, following the video managers (VMG) there have been recorded, as a collection of a plurality of VOB files, one or more titles (hereinafter, referred to as "video title set") edited by a user or the like.

Here, as shown in Fig. 3, the video manager (VMG) comprises a control file "VIDEO_TS.IFO" storing control information relating to an entire DVD 9, a menu VOB file "VIDEO_TS.VOB" storing menu information for selecting each title, and a backup file "VIDEO_TS.BUP" for backing up the same control information as "VIDEO_TS.IFO". In fact, the video manager (VMG) is an equivalent to the management file shown in Fig. 1(b).

The video title sets (i . e. , a collection of titles) can record at most 99 titles, while each respective video title set contains at most 12 files.

As shown in Fig. 3, each video title set comprises: a title control file "VTS_01_0.IFO" storing playback control data indicating a playback sequence of a plurality of VOB files contained in the video title set; a title menu VOB file "VTS_01_0.VOB" storing various menu information; one or more title data VOB files "VTS_01_1.VOB" - "VTS_01_n.VOB" storing presentation data edited by a user or the like; a title control information backup file "VTS_01_0.BUP" for backing up the same playback control data as the title control file "VTS_01_0.IFO".

Here, among the descriptions of the title control file "VTS_01_0.IFO", a description "_01" following "VTS" is an extension indicating the number of a video title set, a next description "_0" is an extension indicating that a playback control data has been stored, a further description ".IFO" is an extension indicating that the file has stored the playback control data.

Further, among the descriptions of the title menu VOB file "VTS_01_0.VOB", a description "_01" following "VTS" is an extension indicating the number of a video title set, a next description "_0" is an extension indicating that various menu information have been stored, a further description ".VOB" is an extension indicating the file is a VOB file.

Moreover, among the descriptions of the title data VOB files "VTS_01_1.VOB" - "VTS_01_n.VOB", a description "_01" following "VTS" is an extension indicating the number of a video title set, a next description "_1" - "_n" is an extension indicating that the file is a VOB file for storing presentation data, a further description ".VOB" is an extension indicating the file is a VOB file.

Further, among the descriptions of the title control information backup file "VTS_01_0.BUP", a description "_01" following "VTS" is an extension indicating the number of a video title set, a next description ".BUP" is an extension indicating that the file is a backup file storing the same playback control data as the title control file "VTS_01_0.IFO".

Next, description will be given to explain a structure of the title data VOB files "VTS_01_1.VOB" - "VTS_01_n.VOB". Namely, the presentation data are divided into a plurality of audio data A and video data V as well as sub-picture data S each having a predetermined data length, while a plurality of data A, V, S and playback control data N indicating the logical addresses of respective data A, V, and S are formed into one data unit, so that one or more data units may be stored in the title data VOB files "VTS_01_1.VOB" - "VTS_01_n.VOB". Here, the unit of one data unit is called video object unit (VOBU).

That is, one data group consisting of playback control data N as well as audio data A and video data V is called video object unit (VOBU), and one or more video object units (VOBU) may be stored in the title data VOB files "VTS_01_1.VOB" - "VTS_01_n.VOB". Further, if each of the video object units (VOBU) has a playback control data N, it will be allowed to dispense with audio data A and video data V as well as sub-picture data S, and it is also allowed to have only one of audio data A, video data V and sub-picture data S.

When the present information playback apparatus 1 plays back the video title set #1, the digital signal processing unit 15 will operate to obtain the playback control data of the title control file "VTS_01_0.IFO", so as to detect the playback sequence of the title data VOB files "VTS_01_1.VOB" - "VTS_01_n.VOB", detect the logical addresses of the audio data A, video data V and sub-picture data S in accordance with the playback control data N of the title data VOB files "VTS_01_1.VOB" - "VTS_01_n.VOB", extract the audio data A, video data V and sub-picture data S in accordance with the detected logical addresses or the like, and generate audio data, video data and sub-picture data capable of seamless playback and supply the same to the stream separating unit 16.

For example, if the digital signal processing unit 15 operates to access the title data file "VTS_01_1.VOB" in accordance with the playback control data of the title control file "VTS_01_0.IFO", it is possible to detect the logical addresses of the audio data A and video data V following the playback control data N, in accordance with the playback control data N of the initial video object unit (VOBU#1) of the title data VOB file "VTS_01_1.VOB", thereby reproducing the audio data A, video data V as well as the sub-picture data S into data capable of seamless playback. Next, by virtue of the playback control data N of the video object unit (VOBU#2), it is possible to detect the logical addresses of the audio data A and video data V as well as sub-picture data S following the playback control data N, thereby reproducing the audio data A, video data V as well as the sub-picture data S into data capable of seamless playback. Then, similar to the above, it is also possible to perform the same playback processing with respect to the remaining video object units (VOBU#3) - (VOBU#m), thereby reproducing the same into data capable of seamless playback.

Even in a case where the digital signal processing unit 15 accesses the remaining title data VOB files "VTS_01_2.VOB" - "VTS_01_n.VOB" in accordance with the playback control data of the title control file "VTS_01_0.IFO" and then plays back the same, it is possible to perform the same processing as playing back the audio data A, video data V as well as the sub-picture data S of the video object units (VOBU#1) - (VOBU#m) of the above-mentioned title data VOB file "VTS_01_1.VOB".

Next, description will be given to explain an operation of the information playback apparatus 1 with reference to a flow chart shown in Fig. 5.

As shown in Fig. 5, when a user or the like sets a DVD 9 at a predeterminedposition on a spindle motor 10 and sends an instruction for starting a playback operation to the system controller 23 through the operating section 24, the playback operation will be started under the control of the system controller 23.

When the optical pickup 11 reads out the information recorded in DVD 9, and the digital signal processing unit 15 continuously receives a read-out signal Sin to perform a demodulation processing so as to start a playback of the video title set (so-called title collection), it is possible to continuously obtain various playback control data such as Dvtsi, N or the like, thereby reproducing the audio data A, video data V as well as the sub-picture data S into data capable of seamless playback, in accordance with the obtained playback control data such as Dvtsi, N or the like.

Next, description will be given to explain an example of playing back the video title set #1. As shown, at step ST1 the pickup 11 reads out the playback control data Dvtsi of the title control file "VTS_01_0. IFO" or the playback control data N contained in the title data VOB files "VTS_01_1.VOB" - "VTS_01_n.VOB". Then, at step ST2 the digital signal processing unit 15 demodulates the read-out signal Sin so as to play back the playback control data Dvtsi or the playback control data N. Further, during the above demodulation processing, it is judged whether an error has occurred in the playback control data Dvtsi or the playback control data N because of dust adhering to the DVD 9. If an error has occurred, the process proceeds to step ST5 which will be discussed later. On the other hand, if no error has occurred, the process proceeds to step ST3.

At step ST3, the system controller 23 judges whether the above-mentioned demodulated playback control data Dvtsi or playback control data N are those based on the DVD-Video standard. If yes, the process proceeds to step ST4. If not, the process proceeds to step ST5 which will be discussed later.

At step ST 4, upon having demodulated the playback control data Dvtsi, the digital signal processing unit 15 accesses any one of the title data VOB files "VTS_01_1.VOB" - "VTS_01_n.VOB" in accordance with the playback control data Dvtsi, thereby repeating the operations in the steps beginning from the step ST1. On the other hand, upon having demodulated the playback control data N, the digital signal processing unit 15 will play back the audio data A and the video data V or the sub-picture data S of the video obj ect unit (VOBU) , thereby repeating the operations in the steps beginning from the step ST1.

Namely, upon repeating the operations in the steps ST1 - ST4, the system controller 23 performs a playback processing using a commonly used playback method, accesses any one of the title data VOB files "VTS_01_1.VOB" - "VTS_01_n.VOB" in accordance with the playback control data Dvtsi, and plays back the audio data A and the video data V or the sub-picture data S of the accessed title data VOB file.

Next, once the process proceeds to step ST5, the system controller 23 will determine, in accordance with a commonly used playback processing, that it is necessary to perform a playback method changeover since an error or an incorrect data is contained in the playback control data Dvtsi or the playback control data N, and also judges whether a changeover function is effective. If not, the playback operation of the present information playback apparatus 1 itself will be terminated. If yes, the process proceeds to step ST6.

At the step ST6, the system controller 23 obtains the file name of the VOB file to which the playback control data Dvtsi and the playback control data N containing an error or an incorrect data belong. In other words, the system controller 23 obtains the file name of the VOB file storing the playback control data Dvtsi and the playback control data N containing an error or an incorrect data. Then, the process proceeds to step ST7.

At step ST7, the system controller 23 operates to judge whether the obtained file name is a file name of a title menu VOB file (namely, "VTS_01_0.IFO"), a file name of a title data VOB file (namely, "VTS_01_0.VOB"), a file name of a title data VOB file (namely, "VTS_01_1.VOB" - "VTS_01_n.VOB"), or a file name of a backup file (namely, "VTS_01_0.BUP").

If the above-mentioned file name is a file name of a title data VOB file (namely, any one of "VTS_01_1.VOB" - "VTS_01_n.VOB"), it can be determined that an abnormality exists in the playback control data N, and the process proceeds to step ST8.

At step ST8, the system controller 23 will decide that, among the audio data A, the video data V or the sub-picture control data S forming the video object unit (VOBU) to which the playback control data N judged to have the above abnormality belongs, the logical address of the audio data A, the video data V, or the sub-picture data S being currently played back should be used as a playback address for continuing the playback. Afterwards, the process proceeds to step ST9.

At step ST9, the system controller 23 performs a changeover of playback method and the process proceeds to step ST10.

At step ST10, the digital signal processing unit 15 continues a playback from the audio data A or the video data V or the sub-picture data S located at the above logical address.

Therefore, when the system controller 23 detects a abnormality in the playback control data N during the playback of the audio data A, the video data V and the sub-picture data S forming the video object unit (VOBU), the operations of the steps ST9 and ST10 through the processing of the steps ST7 and ST8 make it possible to continue the playback of the audio data A, the video data V and the sub-picture data S forming the video object unit (VOBU).

Next, in the above-mentioned step ST7, if the system controller 23 judges that the obtained file name is not a file name of the title data VOB file (namely, "VTS_01_1.VOB"-"VTS_01_n.VOB"), the process will proceed to step ST11.

At step ST11, the system controller 23 will search in the video title set (namely, video title set #1) corresponding to the obtained file name, so as to investigate the title data VOB file (namely, "VTS_01_1.VOB - "VTS_01_n.VOB"), thereby selecting an initial (first) title data VOB file. Then, the process proceeds to step ST12.

At the step ST12, the system controller 23 judges that it is necessary to start a playback from the above-selected title data VOB file (namely, "VTS_01_1.VOB"). Then, the process proceeds to step ST9.

At step ST9, the system controller 23 performs a changeover in playback method, and at step ST10 starts a playback from the above-mentioned initial title data VOB file (namely, "VTS_01_1.VOB").

Namely, in the operations of the steps ST9 and ST10 through the processing of the steps ST11 and ST12, the system controller 23 will start a playback from the initial title data VOB file of the video title set.

Although the above description was given to explain an operation where an error or an incorrect data has occurred in the playback control data Dvtsi or N when playing back the video title set #1, the same playback processing can be performed when an error or an incorrect data has occurred in the playback control data Dvtsi or N when playing back the video title sets #2, #3 ....

As described above, according to the information playback apparatus 1 of the present embodiment, when an error due to an error data has occurred in the playback control data Dvtsi which sets up a playback sequence in the title control file belonging to the video title sets #1, #2, and #3 ..., playback method will be changed so as to play back an initial (first) title data VOB file among the title data VOB files belonging to the video title set containing an error. On the other hand, when an abnormality has occurred in the playback control data N of the title data VOB file storing the presentation data, it is possible to continue the playback from the presentation data Dpst consisting of audio data A and video data V or the like specified by a logical address of a time when an abnormality was detected. Therefore, for example, when a user or the like uses an electronic device containing an authoring software and thus having an authoring function and edits digital contents, even if an error data is contained in the playback control data Dvtsi or the playback control data N, it is possible to continue the playback of the presentation data Dpst without bringing about any abnormality to the playback operation or stopping the playback.

Moreover, even in a case where an error has occurred in the playback control data Dvtsi which sets up a playback sequence in the title control file belonging to the video title sets #1, #2, and #3 ..., it is possible to perform a playback method changeover to perform a playback from an initial (first) title data VOB file among the title data VOB files belonging to the video title set containing the error. On the other hand, when an error has occurred in the playback control data N of the title data VOB file storing the presentation data, it is possible to continue the playback from the presentation data Dpst consisting of audio data A and video data V or the like specified by a logical address of a time when an abnormality was detected. Therefore, it is possible to continue the playback of the presentation data Dpst without bringing about any abnormality to the playback operation or stopping the playback.

## Claims

1. An information playback apparatus for playing back contents formed by including one or more data sets having a plurality of files for storing presentation data and having playback control data for managing contents of each of said files, said information playback apparatus comprising:
signal processing means for performing a playback of said presentation data in accordance with control contents of said playback control data;
abnormality detecting means for detecting whether there is an abnormality in said playback control data; and
control means for, when said signal processing means is playing back said presentation data and once said abnormality detecting means detects an abnormality in said playback control data, detecting a data set to which the playback control data containing said abnormality belongs, and causing the signal processing means to perform a playback from the presentation data stored in an initial file belonging to the detected data set, without following said playback control data belonging to the detected data set.

2. An information playback apparatus for playing back contents formed by including one or more data units having presentation data and playback control data for managing the contents of the presentation data, said information playback apparatus comprising:
signal processing means for performing a playback of said presentation data in accordance with control contents of said playback control data;
abnormality detecting means for detecting whether there is an abnormality in said playback control data; and
control means for, when said signal processing means is playing back said presentation data and once said abnormality detecting means detects an abnormality in said playback control data, detecting a data unit to which the playback control data containing said abnormality belongs, and causing the signal processing means to continue a playback from the presentation data belonging to the detected data unit, without following said playback control data belonging to the detected data unit.

3. An information playback apparatus for playing back contents formed by including one or more data sets having a plurality of files and first playback control data for managing contents of each of said files, and including one or more data units in which said files have presentation data and second playback control data for managing contents of said presentation data, said information playback apparatus comprising:
signal processing means for performing a playback of said presentation data in accordance with control contents of said first and second playback control data;
abnormality detecting means for detecting whether there is an abnormality in said first and second playback control data; and
control means for, when said signal processing means is playing back said presentation data and once said abnormality detecting means detects an abnormality in said first playback control data, detecting a data set to which the first playback control data containing said abnormality belongs, and causing the signal processing means to perform a playback from the presentation data stored in an initial file belonging to the detected data set, without following said playback control data belonging to the detected data set,
and for, when said signal processing means is playing back said presentation data and once said abnormality detecting means detects an abnormality in said second playback control data, detecting a data unit to which the second playback control data containing said abnormality belongs, and causing the signal processing means to continue the playback from the presentation data belonging to the detected data unit, without following said playback control data belonging to the detected data unit.

4. The information playback apparatus according to any one of claims 1 to 3, wherein said contents are recorded in a storage medium.

5. The information playback apparatus according to any one of claims 1 to 3, wherein said contents are supplied through transmission media.

6. An information playback method for playing back contents formed by including one or more data sets having a plurality of files for storing presentation data and having playback control data for managing contents of each of said files, said information playback method comprising:
a signal processing step for performing a playback of said presentation data in accordance with control contents of said playback control data;
an abnormality detecting step for detecting whether there is an abnormality in the playback control data; and
a control step for, when in said signal processing step said presentation data is being played back and once said abnormality detecting step detects an abnormality in said playback control data, detecting a data set to which the playback control data containing said abnormality belongs, and using the signal processing step to play back the presentation data stored in an initial file belonging to the detected data set, without following said playback control data belonging to the detected data set.

7. An information playback method for playing back contents formed by including one or more data units having presentation data and playback control data for managing the contents of the presentation data, said information playback method comprising:
a signal processing step for performing a playback of said presentation data in accordance with control contents of said playback control data;
an abnormality detecting step for detecting whether there is an abnormality in the playback control data; and
a control step for, when in said signal processing step said presentation data is being played back and once said abnormality detecting step detects an abnormality in said playback control data, detecting a data unit to which the playback control data containing said abnormality belongs, and continuing in the signal processing step a playback from the presentation data belonging to the detected data unit, without following said playback control data belonging to the detected data unit.

8. An information playback method for playing back contents formed by including one or more data sets having a plurality of files and first playback control data for managing contents of each of said files, and including one or more data units in which said files have presentation data and second playback control data for managing contents of said presentation data, said information playback method comprising:
a signal processing step for performing a playback of said presentation data in accordance with control contents of said first and second playback control data;
an abnormality detecting step for detecting whether there is an abnormality in said first and second playback control data; and
a control step for, when in said signal processing step said presentation data is being played back and once said abnormality detecting step detects an abnormality in said first playback control data, detecting a data set to which the first playback control data containing said abnormality belongs, and performing in said signal processing step a playback of the presentation data stored in an initial file belonging to the detected data set, without following said playback control data belonging to the detected data set,
and for, when in said signal processing step said presentation data is being played back and once said abnormality detecting step detects an abnormality in said second playback control data, detecting a data unit to which the second playback control data containing said abnormality belongs, and continuing in the signal processing step the playback from the presentation data belonging to the detected data unit, without following said playback control data belonging to the detected data unit.

9. The information playback method according to any one of claims 6 to 8, wherein said contents are recorded in a storage medium.

10. The information playback method according to any one of claims 6 to 8, wherein said contents are supplied through transmission media.

11. A program for causing a computer to play back contents formed by including one or more data sets having a plurality of files for storing presentation data and having playback control data for managing contents of each of said files, said program comprising:
a signal processing step for causing said computer to play back said presentation data in accordance with control contents of said playback control data;
an abnormality detecting step for causing the computer to detect whether there is an abnormality in the playback control data; and
a control step for, when said computer uses said signal processing step to play back said presentation data and once said abnormality detecting step detects an abnormality in said playback control data, detecting a data set to which the playback control data containing said abnormality belongs, and using the signal processing step to play back the presentation data stored in an initial file belonging to the detected data set, without following said playback control data belonging to the detected data set.

12. A program for causing a computer to play back contents formed by including one or more data units having presentation data and playback control data for managing the contents of the presentation data, said program comprising:
a signal processing step for causing said computer to play back said presentation data in accordance with control contents of said playback control data;
an abnormality detecting step for causing said computer to detect whether there is an abnormality in the playback control data; and
a control step for, when said computer uses said signal processing step to play back said presentation data and once said abnormality detecting step detects an abnormality in said playback control data, detecting a data unit to which the playback control data containing said abnormality belongs, and using the signal processing step to continue a playback from the presentation data belonging to the detected data unit, without following said playback control data belonging to the detected data unit.

13. A program for causing a computer to play back contents formed by including one or more data sets having a plurality of files and first playback control data for managing contents of each of said files, and including one or more data units in which said files have presentation data and second playback control data for managing contents of said presentation data, said program comprising:
a signal processing step for causing said computer to play back said presentation data in accordance with control contents of said first and second playback control data;
an abnormality detecting step for causing said computer to detect whether there is an abnormality in said first and second playback control data; and
a control step for, when said computer uses said signal processing step to play back said presentation data and once said abnormality detecting step detects an abnormality in said first playback control data, detecting a data set to which the first playback control data containing said abnormality belongs, and using said signal processing step to play back the presentation data stored in an initial file belonging to the detected data set, without following said playback control data belonging to the detected data set,
and for, when said computer uses said signal processing step to play back said presentation data and once said abnormality detecting step detects an abnormality in said second playback control data, detecting a data unit to which the second playback control data containing said abnormality belongs, and using the signal processing step to continue the playback of the presentation data belonging to the detected data unit, without following said playback control data belonging to the detected data unit.

14. The program according to any one of claims 11 to 13, wherein said contents are recorded in a storage medium subjected to information playback in said computer.

15. The program according to any one of claims 11 to 13, wherein said contents are supplied to said computer through transmission media.
